# EUROPEAN PATENT APPLICATION

(11) **EP 3 878 523 A1**
(43) Date of publication of application: **15.09.2021**
(21) Application number: 21161868.1
(22) Date of filing: 10.03.2021
(51) Int. Cl.: A62C 3/06, A62C 5/00, A62C 99/00, B64D 37/32, H01M 8/04089, A62C 3/08

(54) **PROTECTED SPACE INERTING SYSTEM AND METHOD**

(30) Priority: 10.03.2020 US 202016814524
(71) Applicant: Hamilton Sundstrand Corporation, Charlotte, NC 28217-4578 (US)
(72) Inventor: RHEAUME, Jonathan, West Hartford, CT 06119 (US); SAVIERS, Kimberly Rae, Glastonbury, CT 06033 (US)
(74) Representative: Dehns

(57) **Abstract**

A system and method for providing inerting gas to a protected space. Oxygen is directed from an oxygen source (12) to a motive port (64) of an ejector (18), and air is introduced to a suction port (68) of the ejector. A gas mixture of oxygen and air is directed from an outlet port (73) of the ejector to a reactor, and a reactant is directed from a reactant source (16) to the reactor. Oxygen in the gas mixture is reacted with the reactant to incorporate the oxygen into a non-combustible compound, and an inerting gas comprising the non-combustible compound is directed to the protected space (22).

## Description

### BACKGROUND

The subject matter disclosed herein generally relates to systems for generating and providing inert gas, oxygen, and/or power on vehicles, and more specifically to fluid flow operation of such systems.

It is recognized that fuel vapors within fuel tanks become combustible or explosive in the presence of oxygen. An inerting system decreases the probability of combustion or explosion of flammable materials in a fuel tank by maintaining a chemically non-reactive or inert gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel vapor concentration of the ullage to below the lower explosive limit (LEL), or 3) increasing the fuel concentration to above the upper explosive limit (UEL). Many systems reduce the risk of oxidation of fuel by reducing the oxygen concentration by introducing an inert gas such as nitrogen-enriched air (NEA) (i.e., oxygen-depleted air or ODA) to the ullage. The introduction of NEA or ODA to the ullage displaces oxygen with a mixture of nitrogen and oxygen at target thresholds for avoiding explosion or combustion.

It is known in the art to equip vehicles (e.g., aircraft, military vehicles, etc.) with onboard inert gas generating systems, which supply nitrogen-enriched air to the vapor space (i.e., ullage) within the fuel tank. It is also known to store inert gas such as Halon onboard for fire suppression systems. In the case of nitrogen-enriched air, the nitrogen-enriched air has a substantially reduced oxygen content that reduces or eliminates oxidizing conditions within the fuel tank. Onboard inert gas generating systems typically use membrane-based gas separators. Such separators contain a membrane that is permeable to oxygen and water molecules, but relatively impermeable to nitrogen molecules. A pressure differential across the membrane causes oxygen molecules from air on one side of the membrane to pass through the membrane, which forms oxygen-enriched air (OEA) on the low-pressure side of the membrane and nitrogen-enriched air (NEA) on the high-pressure side of the membrane. The requirement for a pressure differential necessitates a source of compressed or pressurized air. Other types of inert gas generators rely on reactions in which oxygen is reacted with a reactant to incorporate the oxygen into an inert compound. Examples of such inert gas generators include catalytic oxidation reactors or electrochemical cell reactors.

Inert gas generators that react oxygen with a reactant can use air as a source of oxygen; however, ambient air may not always be available at specified conditions for operation (e.g., pressure and temperature). Accordingly, there is a need for alternative arrangements to provide oxygen to inert gas generator reactors.

### BRIEF DESCRIPTION

A system is disclosed for providing inerting gas to a protected space. The system includes an oxygen source, a reactant source, and a reactor configured to chemically react the oxygen with the reactant and incorporate the oxygen into a non-combustible compound. The reactor includes an inlet in operative fluid communication with the reactant source, and an outlet in operative fluid communication with the protected space. The system also includes an ejector including a motive fluid port in operative fluid communication with the oxygen source, a suction port in operative fluid communication with an air source, and an outlet port in operative fluid communication with the reactor inlet.

In addition to one or more of the features described above, or as an alternative to any of the foregoing embodiments, the reactor can include an electrochemical cell including a cathode and an anode separated by an electrolyte, a cathode-side inlet in operative fluid communication with the ejector outlet port, a cathode-side outlet in operative fluid communication with the protected space, and an anode-side inlet in operative fluid communication with the reactant source.

In addition to one or more of the features described above, or as an alternative to any of the foregoing embodiments, the electrochemical cell can be configured as a proton transfer electrochemical cell reactor including a proton transfer medium as said electrolyte.

In addition to one or more of the features described above, or as an alternative to any of the foregoing embodiments, the electrochemical cell can be configured as an oxygen ion transfer electrochemical cell reactor including an oxygen ion transfer medium as said electrolyte.

In addition to one or more of the features described above, or as an alternative to any of the foregoing embodiments, the system can include an electrical connection in controllable communication between the electrochemical cell and a power sink, and between the electrochemical cell and a power source, and a controller configured to alternatively operate the system in alternate modes of operation selected from a plurality of modes, including: a first mode in which electric power is directed from the power source to the electrochemical cell to provide a voltage difference between the anode and the cathode, and an inerting gas is directed from the cathode-side outlet to the protected space, and a second mode in which reactant from the reactant source is directed to the anode, electric power is directed from the electrochemical cell to the power sink, and the inerting gas is directed from the cathode-side outlet to the protected space

In addition to one or more of the features described above, or as an alternative to any of the foregoing embodiments, the reactor can include a catalytic oxidation reactor configured to react oxygen with reactant from the reactant source in an oxidation reaction in the presence of a catalyst.

In addition to one or more of the features described above, or as an alternative to any of the foregoing embodiments, the system can further include a controller configured to alternatively operate the system in alternate modes of operation selected from a plurality of modes, including: a first mode in which the oxygen source and ejector are isolated from the reactor, and the reactor receives compressed air as an alternate source of oxygen; and a second mode in which compressed air is not used, and the reactor receives oxygen and air from the ejector outlet port.

In addition to one or more of the features described above, or as an alternative to any of the foregoing embodiments, the oxygen source can include stored compressed oxygen gas.

In addition to one or more of the features described above, or as an alternative to any of the foregoing embodiments, the system can further include a heater or heat exchanger arranged to heat or cool the oxygen from the oxygen source.

In addition to one or more of the features described above, or as an alternative to any of the foregoing embodiments, the system can further include a pressure regulator disposed on an oxygen flow path between the oxygen source and the ejector.

Also disclosed is a method for providing inerting gas to a protected space. According to the method, oxygen is directed from an oxygen source to a motive port of an ejector, and air is introduced to a suction port of the ejector. A gas mixture of oxygen and air is directed from an outlet port of the ejector to a reactor, and a reactant is directed from a reactant source to the reactor. Oxygen in the gas mixture is reacted with the reactant to incorporate the oxygen into a non-combustible compound, and an inerting gas comprising the non-combustible compound is directed to the protected space.

In addition to one or more of the features described above, or as an alternative to any of the foregoing embodiments, the reactor can include an electrochemical cell including a cathode and an anode separated by an electrolyte, a cathode-side inlet in operative fluid communication with the ejector outlet port, a cathode-side outlet in operative fluid communication with the protected space, and an anode-side inlet in operative fluid communication with the reactant source.

In addition to one or more of the features described above, or as an alternative to any of the foregoing embodiments, the electrochemical cell can be configured as an oxygen ion transfer electrochemical cell reactor including an oxygen ion transfer medium as the electrolyte, and the method includes directing reformate or hydrogen reactant to the anode-side inlet.

In addition to one or more of the features described above, or as an alternative to any of the foregoing embodiments, the electrochemical cell can be configured as a proton transfer electrochemical cell reactor including a proton transfer medium as the electrolyte, and the method includes directing hydrogen reactant to the anode-side inlet.

In addition to one or more of the features described above, or as an alternative to any of the foregoing embodiments, the method can further include alternatively operating the system in alternate modes of operation selected from a plurality of modes including: a first mode in which electric power is directed from a power source to the electrochemical cell to provide a voltage difference between the anode and the cathode, and an inerting gas is directed from the cathode-side outlet to the protected space; and a second mode in which reactant from the reactant source is directed to the anode, electric power is directed from the electrochemical cell to a power sink, and the inerting gas is directed from the cathode-side outlet to the protected space.

In addition to one or more of the features described above, or as an alternative to any of the foregoing embodiments, the reactor can include a catalytic oxidation reactor configured to react oxygen with the reactant in an oxidation reaction in the presence of a catalyst.

In addition to one or more of the features described above, or as an alternative to any of the foregoing embodiments, the method can further include alternatively operating the system in alternate modes of operation selected from a plurality of modes including: a first mode in which the oxygen source and ejector are isolated from the reactor, and the reactor receives compressed air as an alternate source of oxygen; and a second mode in which compressed air is not used, and the reactor receives oxygen and air from the ejector outlet port.

In addition to one or more of the features described above, or as an alternative to any of the foregoing embodiments, the oxygen source can include stored compressed oxygen gas.

In addition to one or more of the features described above, or as an alternative to any of the foregoing embodiments, the method can further include heating or cooling the oxygen from the oxygen source.

In addition to one or more of the features described above, or as an alternative to any of the foregoing embodiments, the method can further include regulating a pressure of oxygen on an oxygen flow path between the oxygen source and the ejector.

### BRIEF DESCRIPTION OF THE DRAWINGS

The following descriptions should not be considered limiting in any way. With reference to the accompanying drawings, like elements are numbered alike:
FIGS. 1A and 1B are schematic illustrations of different views of an aircraft;
FIG. 2 is a schematic illustration of an example embodiment of an inerting system;
FIG. 3 is a schematic illustration of an example embodiment of an ejector;
FIG. 4 is a schematic illustration of an inerting system with electrochemical reactor;
FIG. 5 is a schematic illustration of an electrochemical reactor that can be operated as a fuel cell or as an electrolyzer; and
FIG. 6 is a schematic illustration of an inerting system with a catalytic oxidation reactor.

### DETAILED DESCRIPTION

A detailed description of one or more embodiments of the disclosed apparatus and method are presented herein by way of exemplification and not limitation with reference to the Figures.

Although shown and described above and below with respect to an aircraft, embodiments of the present disclosure are applicable to on-board systems for any type of vehicle or for on-site installation in stationary systems. For example, military vehicles, heavy machinery vehicles, sea craft, ships, submarines, etc., may benefit from implementation of embodiments of the present disclosure. For example, aircraft and other vehicles having fire suppression systems, emergency power systems, and other systems that may involve inert gas-generating systems as described herein may include the systems described herein. As such, the present disclosure is not limited to application to aircraft, but rather aircraft are illustrated and described as example and explanatory embodiments for implementation of embodiments of the present disclosure.

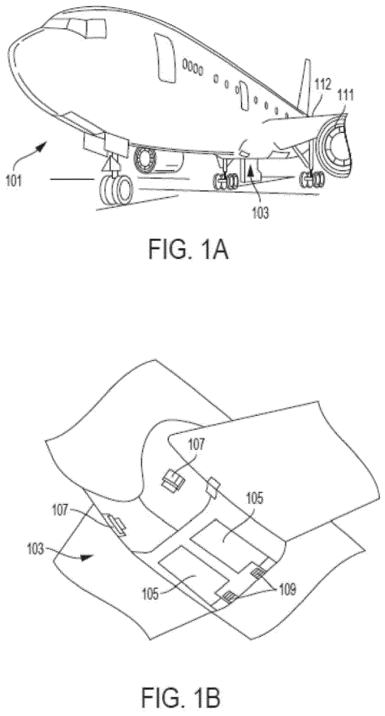

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board inert gas generation systems (OBIGGS) within the bay 103. As shown in FIG. 1B, the bay 103 includes bay doors 105 that enable installation and access to one or more components (e.g., OBIGGS, ECS, etc.). During operation of environmental control systems and/or fuel inerting systems of the aircraft, air that is external to the aircraft can flow into one or more ram air inlets 107. The outside air may then be directed to various system components (e.g., ECS heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBIGGS, ECS, and/or other systems, as will be appreciated by those of skill in the art.

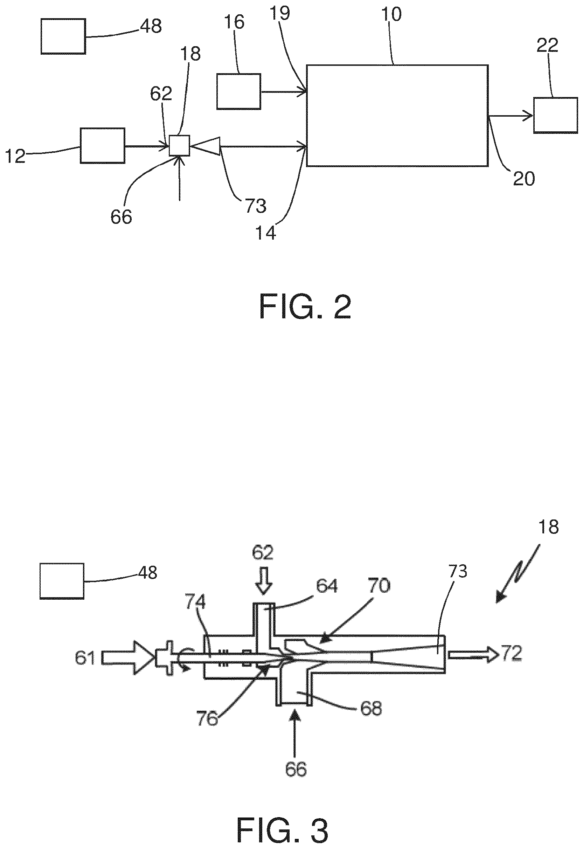

With reference now to FIG. 2, an example embodiment of a fuel tank inerting system with a reactor 10 is shown. As shown in FIG. 2, oxygen from an oxygen source 12 is directed to a motive fluid port 62 of an ejector 18. The oxygen source 12 can be any type of oxygen source, including but not limited to a storage vessel containing pressurized oxygen gas, a storage vessel containing liquid oxygen, or an oxygen-generator such as an oxygen-generating reactor that produces oxygen by thermal decomposition of a chlorate salt. In some aspects, the oxygen source includes a storage vessel containing pressurized oxygen gas or a storage vessel containing liquid oxygen. The oxygen introduced to the motive fluid port 62 acts as a motive fluid to entrain air introduced through a suction port 66. The air contains nitrogen that forms the basis of an inert gas (nitrogen-enriched) when processed in reactor 10. The air enables the use of pure oxygen to generate inert gas in conjunction with an ejector. The air can be drawn from any type of air source, including but not limited to ambient air in the region around the ejector 18. The oxygen and air are mixed in the ejector 18, and discharged from an outlet port 73 and directed to an inlet 14 of the reactor 10. A reactant that is reactive with oxygen to generate a non-combustible compound is directed from a reactant source 16 to an inlet 19 of the reactor 10. Oxygen from the oxygen source 12 and from the air is reacted with the reactant from the reactant source 16 to form a non-combustible compound(s) included in an inerting gas discharged from a reactor outlet 20 and directed to a protected space 22. Examples of protected spaces include, but are not limited, a fuel tank ullage space, a cargo hold, or an equipment bay.

An example embodiment of an ejector 18 is shown in FIG. 3. As shown in FIG. 3, the ejector 18 includes a motive fluid port 64 that receives a motive fluid 62 (in this case, oxygen), and suction port 68 that receives a suction fluid 66 (in this case, air). The motive fluid 62 and the suction fluid 66 enter a mixing section 70, with the motive fluid 62 acting to provide suction to draw in the suction fluid 66 according to the Bernoulli principle. The mixed fluids 72 are discharged from the ejector 18 through outlet port 73. In some embodiments, the ejector 18 can have a fixed cross-section throat, which can be sized to act as a non-critical (i.e., subsonic) ejector with a relatively open throat area for high secondary flow, or can be sized to act as a critical (i.e., sonic) ejector with a relatively restricted throat area for deeper vacuum. In some embodiments (as shown in FIG. 3), the ejector can provide a controllably variable throat area to accommodate different operating conditions such as during different flight conditions (e.g., different bleed air conditions such as temperature or pressure, conditions of relatively high flow during periods of high demand for inert gas such as at system start-up or during aircraft descent, or conditions of relatively low flow during periods of low demand for inert gas such as during aircraft ascent or level-altitude cruise).

In the example embodiment of FIG. 3, the throat area can be varied by control of the position of a threaded screw 74 located in a nozzle 76. To allow adjustability, adjustable threaded screw 74 is sealingly and threadedly engaged to the ejector 18 within nozzle 76 near the motive fluid inlet 64. Depending on the position of adjustable threaded screw 74, the throat area can be reduced (e.g., by driving the adjustable threaded screw 74 farther into the nozzle 76) or enlarged (e.g., by backing the adjustable threaded screw out of the nozzle 76). The position of the adjustable threaded screw can be controlled by an actuator 61, which can be controlled by a controller such as a controller 48. It is noted that although only a single ejector 18 is shown in FIG. 2 and other Figures herein, banks of ejectors arranged in series or in parallel can be used. Further description of arrangements of banks of ejectors in series or parallel can be found in U.S. Patent Application Publication No. US 2019/0282951 A1. In some aspects, an ejector with a high entrainment ratio can be used in order to dilute the pure oxygen with nitrogen. In order to generate an inert gas, the oxygen must be consumed in part so as to attain a gaseous mixture with less than 12% oxygen (depending on altitude). Air contains approximately 4 parts nitrogen to 1 part oxygen, so it is desirable to use as little pure oxygen as a motive fluid in order to entrain the maximum quantity of nitrogen. In some aspects, the ejector can have an entrainment ratio in a range with a lower end of 1, 2, or 3, and an upper end of 20, 25, or 30. These range endpoints can be independently combined to produce different ranges, and each possible range produced by such endpoints is hereby expressly disclosed.

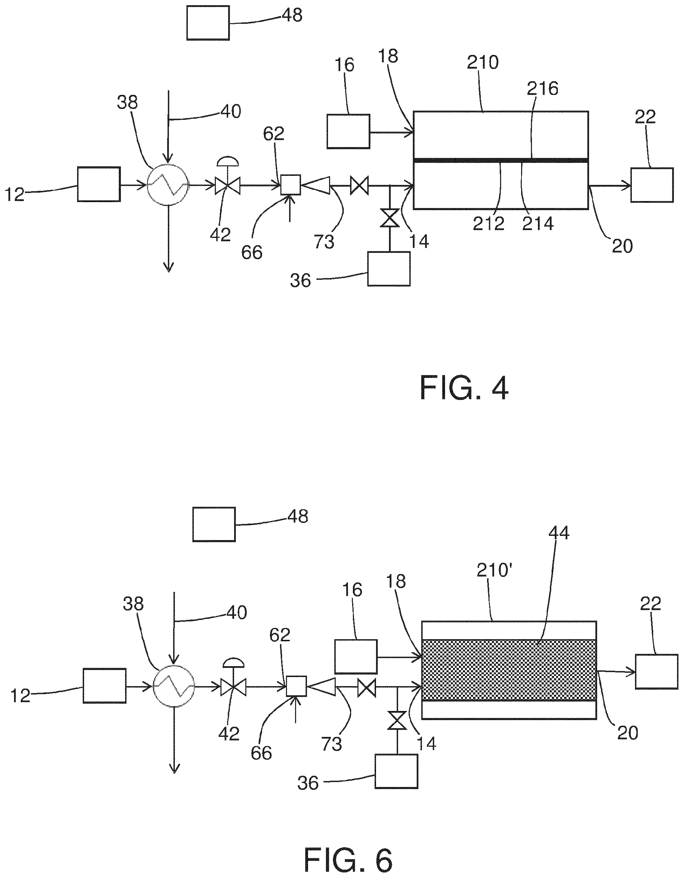

With reference now to FIG. 4, an example embodiment of an inerting system with an electrochemical reactor 210 is schematically shown. As shown in FIG. 4, oxygen from the oxygen source 12 is directed a heat exchanger 38 where it can absorb heat from a heat source (e.g., bleed air on its way to an on-board environmental control system) along a heat transfer flow path 40. In some aspects, oxygen from compressed oxygen or liquid oxygen can be at a low temperature relative to a desired operating temperature of the electrochemical reactor 210, which can result from the effects of expanding oxygen gas from a compressed state. In some aspects, oxygen from a chlorate salt can be at a high temperature relative to a desired operating temperature of the electrochemical reactor 210. In some embodiments, the heat exchanger 38 (or a heater such as an electric heater) can provide heat to raise the temperature of the oxygen to an operating temperature of the reactor. In some embodiments, the heat exchanger 38 can reject heat to a heat sink (e.g., ram air, conditioned air, or other heat sink) along the heat transfer flow path 40. For example, oxygen from a chlorate salt can be at a high temperature relative to the desired operating temperature of reactor 210. The oxygen exiting the heat exchanger 38 is directed to the motive fluid port 62 of the ejector 18. The oxygen introduced to the motive fluid port 62 acts as a motive fluid to entrain air introduced through a suction port 66. The oxygen and air are mixed in the ejector 18, and discharged from an outlet port 73 and directed to the inlet 14, which is in operative fluid communication with the cathode side of the electrochemical reactor 210. A reactant that is reactive with oxygen to generate a non-combustible compound is directed from a reactant source 16 to an inlet 18, which is in operative fluid communication with an anode side of the electrochemical reactor 210. Oxygen from the oxygen source 12 and from the air introduced to the suction port 66 is reacted with the reactant from the reactant source 16 to form a non-combustible compound(s) included in an inerting gas discharged from the reactor outlet 20 and directed to the protected space 22. In some aspects, the system can include an alternate source of oxygen 36 for the electrochemical reactor 210, and the system controller 48 can be configured to operate the system in alternative modes in which oxygen is supplied from either the oxygen source 12 or the alternate source 36. This can provide a technical effect of using a continuous source of oxygen such as compressor bleed air in response to a first condition (e.g., normal operation of an aircraft), while preserving stored oxygen in the oxygen source 12 for conditions in which the alternate source 36 (e.g., compressor bleed air) is not available (e.g., multiple aircraft engine failures).

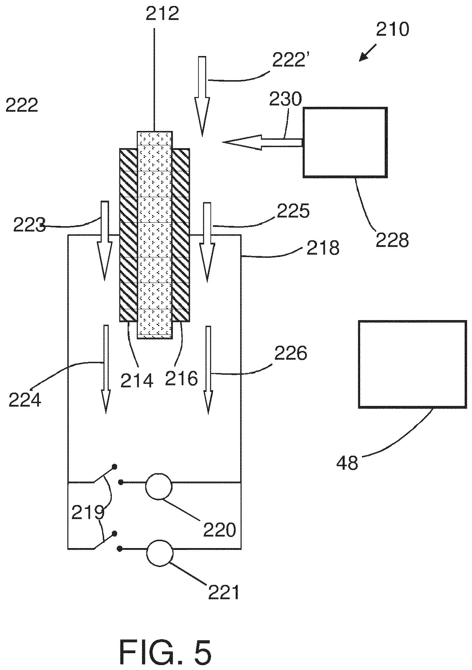

Electrochemical cell reactors and their deployment and operation in an inert gas-generating system are described in further detail below. Referring now to FIG. 5, an electrochemical cell 210 is schematically depicted. The electrochemical cell 210 comprises a separator 212 that includes an ion transfer medium. As shown in FIG. 5, the separator 212 has a cathode 214 disposed on one side and an anode 216 disposed on the other side. Cathode 214 and anode 216 can be fabricated from catalytic materials suitable for performing the needed electrochemical reaction (e.g., the oxygen-reduction reaction at the cathode and an oxidation reaction at the anode). Exemplary catalytic materials include, but are not limited to, nickel, platinum, palladium, rhodium, carbon, gold, tantalum, titanium, tungsten, ruthenium, iridium, osmium, zirconium, alloys thereof, and the like, as well as combinations of the foregoing materials. Cathode 214 and anode 216 (which can include catalysts) are positioned adjacent to, and preferably in contact with the separator 212 and can be porous metal layers deposited (e.g., by vapor deposition) onto the separator 212, or can have structures comprising discrete catalytic particles adsorbed onto a porous substrate that is attached to the separator 212. Alternatively, the catalyst particles can be deposited on high surface area powder materials (e.g., graphite or porous carbons or metal-oxide particles) and then these supported catalysts may be deposited directly onto the separator 212 or onto a porous substrate that is attached to the separator 212. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 212. In either case, the cathode and anode layers 214 and 216 may also include a binder material, such as a polymer, especially one that also acts as an ionic conductor such as anion-conducting ionomers. In some embodiments, the cathode and anode layers 214 and 216 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

In some aspects, the electrochemical cell can be arranged and configured to operate exclusively as a fuel cell for providing electrical power and inerting gas. In some aspects, as shown in FIG. 5, the electrochemical cell can be arranged and configured to operate in alternative modes of operation as a fuel cell or as an electrolyzer. The cathode 214 and anode 216 can be controllably electrically connected by electrical circuit 218 to a controllable electric power system 220, which can include a power source (e.g., DC power rectified from AC power produced by a generator powered by a gas turbine engine used for propulsion or by an auxiliary power unit) and optionally a power sink 221. In some embodiments, the electric power system 220 can optionally include a connection to the electric power sink 221 (e.g., one or more electricity-consuming systems or components onboard the vehicle) with appropriate switching (e.g., switches 219), power conditioning, or power bus(es) for such on-board electricity-consuming systems or components, for optional operation in an alternative fuel cell mode.

With continued reference to FIG. 5, a cathode supply fluid flow path 222 directs gas from an air source (not shown) into contact with the cathode 214. Oxygen is electrochemically depleted from air along the cathode fluid flow path 223, and can be exhausted to the atmosphere or discharged as nitrogen-enriched air (NEA) (i.e., oxygen-depleted air, ODA) to an inert gas flow path 224 for delivery to an on-board fuel tank (not shown), or to a vehicle fire suppression system associated with an enclosed space (not shown), or controllably to either or both of a vehicle fuel tank or an on-board fire suppression system. An anode fluid flow path 225 is configured to controllably receive an anode supply fluid from an anode supply fluid flow path 222'. The anode fluid flow path 225 includes water when the electrochemical cell is operated in an electrolytic mode to produce protons at the anode for proton transfer across the separator 212 (e.g., a proton transfer medium such as a proton exchange membrane (PEM) electrolyte or phosphoric acid electrolyte). If the system is configured for alternative operation in a fuel cell mode, the anode fluid flow path 225 can be configured to controllably also receive fuel (e.g., hydrogen). The protons formed at the anode are transported across the separator 212 to the cathode 214, leaving oxygen on the anode fluid flow path, which is exhausted through an anode exhaust 226. The oxygen effluent may be entrained in process water in the form of bubbles or dissolved in the process water. Control of fluid flow along these flow paths can be provided through conduits and valves (not shown), which can be controlled by a controller 48 including a programmable or programmed microprocessor.

Exemplary materials from which the electrochemical proton transfer medium can be fabricated include proton-conducting ionomers and ion-exchange resins. Ion-exchange resins useful as proton conducting materials include hydrocarbon- and fluorocarbon-type resins. Fluorocarbon-type resins typically exhibit excellent resistance to oxidation by halogen, strong acids, and bases. One family of fluorocarbon-type resins having sulfonic acid group functionality is NAFION™ resins (commercially available from E. I. du Pont de Nemours and Company, Wilmington, Del.). Alternatively, instead of an ion-exchange membrane, the separator 212 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid electrolyzers and fuel cells.

During operation of a proton transfer electrochemical cell in the electrolytic mode, water is directed to the anode as a reactant source. The water at the anode undergoes an electrolysis reaction according to the formula:

H₂O → ½O₂ + 2H⁺ + 2e⁻ (1a)

Ozone can also be produced at the anode by a reaction according to the formula:

3H₂O → O₃ + 6H⁺ + 6e⁻ (1b)

The electrons produced by these reactions are drawn from electrical circuit 218 powered by electric power source 220 connecting the positively charged anode 216 with the cathode 214. The hydrogen ion reactant (i.e., protons) produced by this reaction migrate across the separator 212, where they react at the cathode 214 with oxygen in the cathode flow path 223 to produce water according to the formula:

½O₂ + 2H⁺ + 2e⁻ → H₂O (2)

Removal of oxygen from cathode flow path 223 produces nitrogen-enriched air exiting the region of the cathode 214. The oxygen evolved at the anode 216 by the reaction of formula (1) is discharged as anode exhaust 226.

During operation of a proton transfer electrochemical cell in a fuel cell mode, fuel (e.g., hydrogen) is directly supplied to the anode as a reactant. The hydrogen at the anode undergoes an electrochemical oxidation according to the formula:

H₂ → 2H⁺ + 2e⁻ (3)

The electrons produced by this reaction flow through electrical circuit 218 to provide electric power to the electric power sink 221. The hydrogen ions (i.e., protons) produced by this reaction migrate across the separator 212, where they react at the cathode 214 with oxygen in the cathode flow path 223 to produce water according to the formula (2):

½O₂ + 2H⁺ + 2e⁻ → H₂O (2)

Removal of oxygen from cathode flow path 223 produces nitrogen-enriched air exiting the region of the cathode 214.

As mentioned above, the electrolysis reaction occurring at the positively charged anode 216 requires water, and the ionic polymers used for a PEM electrolyte perform more effectively in the presence of water. Accordingly, in some embodiments, a PEM membrane electrolyte is saturated with water or water vapor. Although the reactions (1) and (2) are stoichiometrically balanced with respect to water so that there is no net consumption of water, in practice some amount of moisture will be removed through the cathode exhaust 224 and/or the anode exhaust 226 (either entrained or evaporated into the exiting gas streams). Accordingly, in some exemplary embodiments, water from a water source 228 is directed along a water flow path 230 past the anode 216 along an anode fluid flow path (and optionally also past the cathode 214). Such water, which can be recirculated in a flow loop, can also provide cooling for the electrochemical cells. In some exemplary embodiments, water can be provided at the anode from humidity in air along an anode fluid flow path in fluid communication with the anode. In other embodiments, the water produced at cathode 214 can be captured and recycled to anode 216 (e.g., through a water circulation loop, not shown). It should also be noted that, although aspects of this disclosure are contemplated where a single electrochemical cell is employed, in practice multiple electrochemical cells can be electrically connected in series with fluid flow along multiple cathode and anode flow paths routed through manifold assemblies.

In some embodiments, the electrochemical cell 210 can operate utilizing the transfer of oxygen anions across the separator 212. Exemplary materials from which the electrochemical oxygen anion-transporting electrolytes can be fabricated include solid oxides such as yttria-stabilized zirconia and/or ceria doped with rare earth metals. These types of materials are well known and have been used in solid oxide fuel cells (SOFC).

During operation of an oxygen anion transfer electrochemical cell in a power consuming (e.g., electrolyzer) mode, oxygen at the cathode undergoes an electrochemical reduction reaction according to the formula:

½O₂ + 2e⁻ → O⁼ (4).

The electrons consumed by this reaction are drawn from electrical circuit 218 powered by electric power source 220 connecting the positively charged anode 216 with the cathode 214. The oxygen anions produced by this reaction migrate across the separator 212, where they undergo an electrochemical oxidation reaction at the anode 214 according to the formula:

O⁼ → ½O₂ + 2e⁻ (5)

Removal of oxygen from cathode flow path 224 produces nitrogen-enriched air exiting the region of the cathode 214. The oxygen produced at the anode 216 by the reaction of formula (5) is discharged as oxygen or an oxygen-enriched air stream as anode exhaust 26.

During operation of an oxygen ion transfer electrochemical cell in a fuel cell mode, oxygen at the cathode undergoes an electrochemical reduction reaction according to the formula (4), and the electrons consumed by this reaction are drawn from electrons liberated at the anode, which flow through electrical circuit 218 to provide electric power to electric power sink (not shown). The oxygen anions produced by this reaction migrate across the separator 212, where they react with fuel such as hydrogen (i.e., reactant) at the anode according to the formula:

½O₂ + 2e → O⁼ (4)

and

H₂ + O⁼ → H₂O + 2e⁻ (6)

Carbon monoxide (e.g., contained in fuel reformate) can also serve as fuel in solid oxide electrochemical cells. In this case, the oxygen anions produced at the cathode according to formula (4) migrate across the separator 212 where they react with carbon monoxide at the anode according to the formula:

CO + O⁼ → CO₂ + 2e⁻ (7)

Removal of oxygen from cathode flow path 224 produces nitrogen-enriched air exiting the region of the cathode 214. The steam and carbon dioxide produced at the anode 216 by the reactions of formulas (6) and (7) respectively is discharged along with unreacted fuel as anode exhaust 226. Any unreacted fuel that exits anode 216 via anode exhaust flow path 226 can be recycled to fuel flow path 432 using an ejector or blower (not shown), or can be fed to a fuel processing unit wherein the steam and carbon dioxide contribute to reforming.

As mentioned above, in some embodiments the reactor can be a catalytic oxidation reactor that reacts a fuel (e.g., a hydrocarbon fuel) with oxygen in a controlled oxidation in the presence of a catalyst. This reaction proceeds according to the formula:

CₙH₂ₙ₊₂ + (1.5n+0.5)O₂ → nCO₂ + (n+1)H₂O (8)

With reference now to FIG. 6, an example embodiment of an inerting system with a catalytic oxidation reactor 210' is schematically shown. As shown in FIG. 4, oxygen from the oxygen source 12 is directed a heat exchanger 38 where it can absorb heat from a heat source (e.g., bleed air on its way to an on-board environmental control system) along a heat transfer flow path 40. In some aspects, oxygen from compressed oxygen or liquid oxygen can be at a low temperature, which can result from the effects of expanding oxygen gas from a compressed state. The heat exchanger 38 (or a heater such as an electric heater) can provide heat to raise the temperature of the oxygen to an operating temperature of the reactor, and can also increase the pressure of the oxygen gas to enhance its capabilities as a motive fluid. The oxygen exiting the heat exchanger 38 is directed to the motive fluid port 62 of the ejector 18. The oxygen introduced to the motive fluid port 62 acts as a motive fluid to entrain air introduced through a suction port 66. The oxygen and air are mixed in the ejector 18, and discharged from an outlet port 73 and directed to the inlet 14 at the reactor 210', which is in operative fluid communication with a catalyst 44 in the reactor. A reactant that is reactive with oxygen to generate a non-combustible compound is directed from a reactant source 16 to an inlet 18, which is in operative fluid communication with a catalyst 44 in the electrochemical reactor 210'. Oxygen from the oxygen source 12 and from the air introduced to the suction port 66 is reacted with the reactant from the reactant source 16 to form a non-combustible compound(s) included in an inerting gas discharged from the reactor outlet 20 and directed to the protected space 22. The entrained air dilutes the pure oxygen which has the effect of reducing the flame temperature which is desirable to avoid thermal degradation to the catalyst including sintering. In some aspects, the system can include an alternate source of oxygen 36 for the electrochemical reactor 210, and the system controller 48 can be configured to operate the system in alternative modes in which oxygen is supplied from either the oxygen source 12 or the alternate source 36. This can provide a technical effect of using a continuous source of oxygen such as compressor bleed air in response to a first condition (e.g., normal operation of an aircraft), while preserving stored oxygen in the oxygen source 12 for conditions in which the alternate source 36 (e.g., compressor bleed air) is not available (e.g., multiple aircraft engine failures).

As further shown in the Figures, the systems disclosed herein can include a controller 48. The controller 48 can be in operative communication with the components shown in the Figures, as well as additional components (not shown) that may be utilized by the skilled person in implementing this disclosure, including but not limited to the ejector 18, reactors, reactant sources, and any associated valves, pumps, compressors, conduits, ejectors, pressure regulators, or other fluid flow components, and with switches, sensors, and other electrical system components, and any other system components to operate the inerting gas system. These control connections can be through wired electrical signal connections (not shown) or through wireless connections. In some embodiments, the controller 48 can be configured to operate the system according to specified parameters, as discussed in greater detail further above. The controller can be an independent controller dedicated to controlling the inert gas generating system, or can interact with other onboard system controllers or with a master controller. In some embodiments, data provided by or to the controller 48 can come directly from a master controller.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for providing inerting gas to a protected space, comprising:
an oxygen source (12);
a reactant source (16);
a reactor (10) configured to chemically react the oxygen with the reactant and incorporate the oxygen into a non-combustible compound, said reactor including an inlet (19) in operative fluid communication with the reactant source, and an outlet (20) in operative fluid communication with the protected space (22); and
an ejector (18) including a motive fluid port (64) in operative fluid communication with the oxygen source, a suction port (68) in operative fluid communication with an air source, and an outlet port (73) in operative fluid communication with the reactor inlet.

2. The system of claim 1, wherein the reactor includes an electrochemical cell (210) including a cathode (214) and an anode (216) separated by an electrolyte (212), a cathode-side inlet in operative fluid communication with the ejector outlet port, a cathode-side outlet in operative fluid communication with the protected space, and an anode-side inlet in operative fluid communication with the reactant source.

3. The system of claim 2, wherein the electrochemical cell is configured as a proton transfer electrochemical cell reactor including a proton transfer medium as said electrolyte.

4. The system of claim 2, wherein the electrochemical cell is configured as an oxygen ion transfer electrochemical cell reactor including an oxygen ion transfer medium as said electrolyte.

5. The system of claim 2, further comprising:
an electrical connection (218) in controllable communication between the electrochemical cell and a power sink (221), and between the electrochemical cell and a power source; and
a controller (48) configured to alternatively operate the system in alternate modes of operation selected from a plurality of modes including:
a first mode in which electric power is directed from the power source to the electrochemical cell to provide a voltage difference between the anode and the cathode, and an inerting gas is directed from the cathode-side outlet to the protected space, and
a second mode in which reactant from the reactant source is directed to the anode, electric power is directed from the electrochemical cell to the power sink, and the inerting gas is directed from the cathode-side outlet to the protected space.

6. The system of claim 1, wherein the reactor includes a catalytic oxidation reactor configured to react oxygen with reactant from the reactant source in an oxidation reaction in the presence of a catalyst.

7. The system of claim 1, further comprising:
a controller (48) configured to alternatively operate the system in alternate modes of operation selected from a plurality of modes including:
a first mode in which the oxygen source and ejector are isolated from the reactor, and the reactor receives compressed air as an alternate source of oxygen; and
a second mode in which compressed air is not used, and the reactor receives oxygen and air from the ejector outlet port.

8. The system of any preceding claim, wherein the oxygen source (12) comprises stored compressed oxygen gas.

9. The system of any preceding claim, further comprising a heater or heat exchanger (38) arranged to heat or cool the oxygen from the source of stored oxygen.

10. The system of any preceding claim, further comprising a pressure regulator disposed on an oxygen flow path between the oxygen source and the ejector.

11. A method for providing inerting gas to a protected space, comprising:
directing oxygen from an oxygen source to a motive port of an ejector and introducing air to a suction port of the ejector;
directing a gas mixture of oxygen and air from an outlet port of the ejector to a reactor;
directing a reactant from a reactant source to the reactor;
reacting oxygen in the gas mixture with the reactant to incorporate the oxygen into a non-combustible compound; and
directing the inerting gas comprising the non-combustible compound to the protected space.

12. The method of claim 11, wherein the reactor includes an electrochemical cell including a cathode and an anode separated by an electrolyte, a cathode-side inlet in operative fluid communication with the ejector outlet port, a cathode-side outlet in operative fluid communication with the protected space, and an anode-side inlet in operative fluid communication with the reactant source.

13. The method of claim 12, wherein the electrochemical cell is configured as an oxygen ion transfer electrochemical cell reactor including an oxygen ion transfer medium as the electrolyte, and the method includes directing reformate or hydrogen reactant to the anode-side inlet.

14. The method of claim 12, further comprising:
alternatively operating the system in alternate modes of operation selected from a plurality of modes including:
a first mode in which electric power is directed from a power source to the electrochemical cell to provide a voltage difference between the anode and the cathode, and an inerting gas is directed from the cathode-side outlet to the protected space, and
a second mode in which reactant from the reactant source is directed to the anode, electric power is directed from the electrochemical cell to a power sink, and the inerting gas is directed from the cathode-side outlet to the protected space.

15. The method of claim 11, further comprising:
alternatively operating the system in alternate modes of operation selected from a plurality of modes including:
a first mode in which the oxygen source and ejector are isolated from the reactor, and the reactor receives compressed air as an alternate source of oxygen; and
a second mode in which compressed air is not used, and the reactor receives oxygen and air from the ejector outlet port.
